# FASCICULE DE BREVET EUROPEEN

(11) **EP 2 089 323 B1**
(45) Date de publication et mention de la délivrance du brevet: **17.04.2013**
(21) Numéro de dépôt: 07822077.9
(22) Date de dépôt: 31.10.2007
(51) Int. Cl.: C02F 1/28, C02F 1/44, C02F 1/52, C02F 9/00

(54) **PROCEDE DE TRAITEMENT DE REJET DE STATION MEMBRANAIRE**
VERFAHREN ZUR BEHANDLUNG VON MEMBRANSTATIONSABFALL
MEMBRANE STATION WASTE TREATMENT PROCESS

(30) Priorité: 06.11.2006 FR 0609676
(43) Date de publication de la demande: 19.08.2009
(73) Titulaire: Veolia Water Solutions & Technologies Support, 94410 Saint-Maurice (FR)
(72) Inventeur: DAINES-MARTINEZ, Catherine, 78570 Andresy (FR); SCHROTTER, Jean-Christophe, 78600 Maisons Laffite (FR); DROUET, Karine, 78260 Acheres (FR); GAID, Abdelkader, 75014 Paris (FR)
(74) Mandataire: Larcher, Dominique
(86) Numéro de dépôt international: PCT/EP2007/061729
(87) Numéro de publication internationale: WO 2008/055827

(56) Documents cités:
- WO-A-2004/083132
- WO-A1-02/34680
- DE-A1- 4 338 569
- ERICSSON B ET AL: "Nanofiltration of highly colored raw water for drinking water production" DESALINATION, ELSEVIER, AMSTERDAM, NL, vol. 108, no. 1, février 1997 (1997-02), pages 129-141, XP004053168 ISSN: 0011-9164
- NEDERLOF ET AL: "Nanofiltration concentrate disposal: experiences in The Netherlands" DESALINATION, ELSEVIER, AMSTERDAM, NL, vol. 178, no. 1-3, 10 juillet 2005 (2005-07-10), pages 303-312, XP005121218 ISSN: 0011-9164

## Description

Le domaine de l'invention est celui du traitement des eaux. Plus précisément, l'invention concerne les procédés de traitement d'eaux comprenant au moins une étape de filtration membranaire.

L'invention s'applique en particulier, mais non exclusivement, aux traitements d'eaux destinées à subir un traitement membranaire d'osmose inverse ou de nanofiltration.

L'invention s'applique de préférence aux procédés de potabilisation d'eau.

Les eaux de consommation humaine sont classiquement soumises à un traitement de filtration sur membranes de nanofiltration ou osmose inverse pour en diminuer la teneur en pesticides et autres micro-polluants organiques qui peuvent être enlevés par procédés membranaires.

La nanofiltration permet également d'enlever les anions bivalents, tels que les sulfates, mais aussi de réduire la teneur en d'autres sels, tels que des nitrates par exemple.

L'osmose inverse utilise des membranes similaires à celles de nanofiltration mais disposant d'un pouvoir de séparation supérieur. Elle permet d'enlever à peu près tous les polluants organiques et minéraux de l'eau. L'osmose inverse est notamment utilisée pour la production d'eau de consommation humaine.

En outre, il est classique de faire subir aux eaux un prétraitement en amont des traitements membranaires d'osmose inverse et de nanofiltration, ce prétraitement consistant en une séparation liquide-solide à basse vitesse (par exemple décantation simple ou lamellaire et/ou filtration directe bi-couche, et/ou flottation).

Un traitement de coagulation-floculation est également fréquemment réalisé.

Un inconvénient des techniques de filtration membranaire est de produire des rejets appelés concentrats représentant 10 à 60% du débit initial, et qui sont dans la plupart des cas, chargés en phosphonates.

Ces phosphonates proviennent des séquestrants injectés en amont des membranes. Ils ont pour but d'éviter la précipitation des sels sur les membranes. Ils sont totalement arrêtés par celles-ci se retrouvant ainsi concentrées environ 2 à 7 fois dans les rejets membranaires.

Or, les autorités tendent à interdire les rejets de phosphonates en rivière. Ce problème apparaît notamment pour les rejets d'unités de production d'eaux potables, qui sont susceptibles pour une partie, d'arriver dans les eaux de rivière. Il est donc nécessaire de proposer une technique pour éviter de tels rejets. Ceci est un objectif de l'invention.

Plus précisément, l'invention a pour objectif de proposer une technique pour l'élimination d'espèces indésirables dans les rejets telles que des phosphonates, appliquée à un traitement d'eau comprenant une étape de prétraitement et de filtration membranaire.

L'invention a également pour objectif de proposer une telle technique qui permette de diminuer les coûts d'exploitation comparés aux procédés de l'art antérieur.

L'invention a aussi pour objectif de fournir une telle technique qui offre des voies de valorisation optimisées pour les boues de prétraitement en particulier celles produites par les étapes de décantation.

Un autre objectif de l'invention est de fournir une telle technique qui soit simple de conception et facile à mettre en oeuvre.

L'invention permet aussi de traiter le rejet afin de le valoriser en l'utilisant pour le nettoyage d'ouvrages industriels comme par exemple le filtre à sable.

Ces objectifs, ainsi que d'autres qui apparaîtront par la suite, sont atteints grâce à l'invention qui a pour objet un procédé de traitement d'eaux, comprenant une première étape de décantation produisant une eau prétraitée et des boues, ladite eau prétraitée subissant au moins une étape de filtration dont au moins une sur membrane, ladite étape de filtration produisant des rejets, caractérisé en ce que lesdits rejets issus de ladite étape de filtration membranaire subissent une phase de traitement incluant au moins une étape de coagulation-floculation suivie d'une deuxième étape de décantation produisant des boues, ladite étape de coagulation-floculation étant précédée d'au moins une étape d'adsorption sur lesdites boues issues de la première et/ou de la deuxième l'étape de décantation, ladite étape d'adsorption visant un abattement des phosphonates contenus dans lesdites eaux issues de ladite étape de filtration membranaire.

Comme indiqué précédemment, les phosphonates proviennent des séquestrants injectés en amont des membranes, concentrées environ 2 à 7 fois sur celles-ci.

Or, les séquestrants étant des chélatants, ils s'adsorbent facilement sur des argiles, des calcites ou des hydroxydes de métaux, ces derniers composés étant classiquement présents dans les boues de décantation. Ces hydroxydes proviennent des coagulants à base de fer ou d'aluminium utilisés lors de l'étape de coagulation.

La capacité d'adsorption des boues est donc utilisée pour éliminer les Phosphonates des concentrats de filtration membranaires.

De plus, le procédé selon l'invention permet une réduction des dosages de coagulant, et donc une réduction des coûts d'exploitation correspondants.

En effet, dans le cas d'une coagulation-floculation classique des concentrats, les dosages de coagulant sont deux à trois fois plus élevés que dans le cas du procédé selon l'invention. Ceci s'explique par le fait qu'une partie des phosphonates est préadsorbée sur des boues de station de traitement de rejets de l'usine d'eau potable. Le résiduel à éliminer implique donc une plus faible consommation en coagulant.

On note que l'utilisation des boues pour l'étape d'adsorption n'engendre pas de surcoûts importants, ces boues étant des sous-produits du procédé selon l'invention. Recycler ces boues est donc peu onéreux.

On note également que le fait d'enrichir les boues en phosphore est un atout pour leur valorisation agricole, la concentration des boues en phosphore permettant une meilleure fertilisation des sols en épandage. De plus, le phosphore sous forme phosphonate est moins accessible que le phosphore sous forme phosphate. Sa dégradation en phosphore sera donc plus lente, donc plus bénéfique pour le sol.

Préférentiellement, lesdites boues sont des boues d'hydroxydes ferreux et/ou d'aluminium.

Selon un mode de réalisation préféré, ladite étape d'adsorption est réalisée sous agitation pendant environ 10 minutes.

Selon une autre caractéristique, ladite étape de coagulation-floculation est réalisée au moins en deux phases successives, la première sous agitation rapide et la deuxième sous agitation lente.

Avantageusement, ladite ou lesdites étapes de décantation sont effectuées pendant environ 15 minutes.

Selon encore une autre caractéristique, le procédé comprend une étape de valorisation desdites boues en épandage agricole.

Dans ce cas, le procédé comprend au moins une étape de concentration desdites boues lorsque celles-ci sont saturées en phosphore.

De cette façon, on augmente encore la concentration en phosphore des boues, ce qui améliore la capacité à fertiliser les sols en épandage.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés parmi lesquels :
- la figure 1 est une représentation synoptique d'un procédé de traitement d'eau selon l'invention ;
- la figure 2 est un graphe d'abattement en phosphore à différentes doses de boues.

Tel qu'indiqué précédemment, le principe de l'invention réside dans le fait de prévoir, dans un traitement d'eau incluant une étape de prétraitement et au moins une étape de filtration membranaire, une étape d'élimination des phosphonates présents dans les concentrats par adsorption physico-chimique sur boues provenant d'un traitement de rejets d'eau potable.

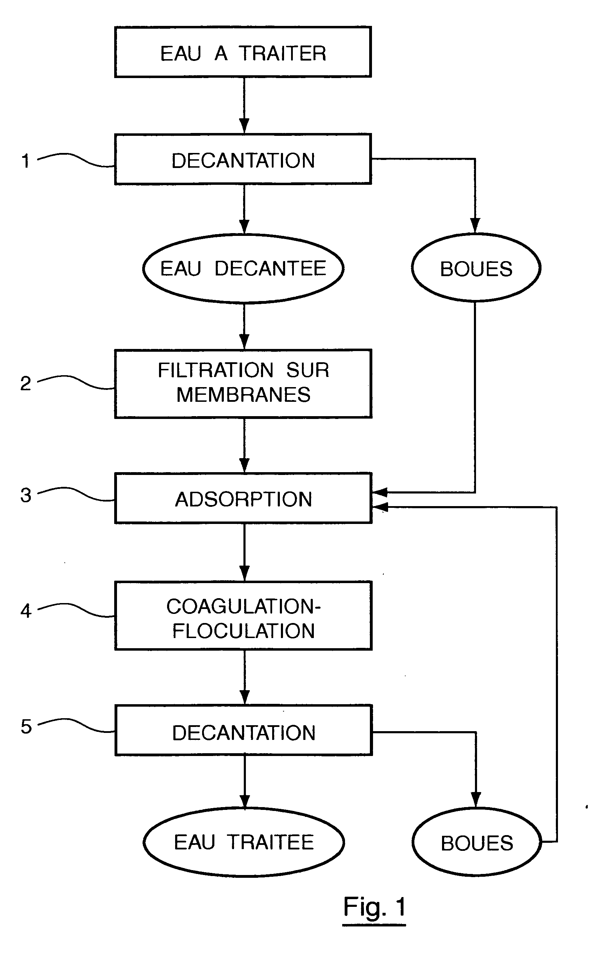

Un exemple de filière selon l'invention est illustré par la figure 1.

Tel qu'illustré, l'eau à traiter subit une étape 1 de décantation primaire à l'issue de laquelle on obtient une eau décantée et des boues de décantation.

L'eau décantée subit une étape 2 de filtration membranaire, par nanofiltration ou osmose inverse.

Les concentrats du traitement membranaire subissent ensuite une phase de traitement incluant une étape 4 de coagulation/floculation et une étape 5 de décantation secondaire, à l'issue de laquelle on obtient une eau traitée et des boues de décantation.

Selon le principe de l'invention, une étape d'adsorption 3 des phosphonates est intercalée entre l'étape 2 de filtration membranaire et l'étape 4 de coagulation/floculation.

Cette étape d'adsorption est réalisée durant 10 minutes, sous agitation, avec une vitesse d'agitation de 60 tr/min, sur les boues issues de l'étape 1 de décantation primaire et/ou sur l'étape 5 de décantation secondaire.

Le matériau adsorbant est de préférence des boues d'hydroxydes ferreux ou d'aluminium. La concentration des boues variera entre 125 et 400 mg/l (exprimées en MES) selon les disponibilités du site.

L'étape 4 de coagulation/floculation se décompose en deux phases : une première phase sous agitation rapide à 250 tr/mn puis une deuxième phase sous agitation lente à 60 tr/mn.

Le coagulant est de type minéral, préférentiellement du FeCl₃, dont la concentration variera entre 50 et 100 mg/l.

Le floculant est du type 4190 SH Floerger (marque déposée), d'une concentration entre 0,5 et 1 ppm.

La durée des étapes 1, 5 de décantation est de 15 minutes.

Des essais ont été réalisés pour montrer l'apport d'un procédé selon l'invention sur la quantité de coagulant par rapport à un procédé sans étape d'adsorption.

Pour réaliser ces essais, des concentrats provenant d'une installation membranaire ont été mélangés à des boues issues d'un traitement de rejet d'une usine d'eau potable. Ces boues sont riches en FeCl3 utilisé comme coagulant sur la station de traitement.

Les essais ont été menés selon le protocole détaillé précédemment.

Pour une meilleure fiabilité des analyses, l'élimination des phosphonates est déterminée suivant l'abattement en Ptotal.

Les concentrats membranaires ont été mélangés durant l'étape d'adsorption à différentes doses de boues exprimées en mg/l de matières en suspension (MES).

Dans un second temps, une étape de coagulation est effectuée à différentes doses de FeCl3.

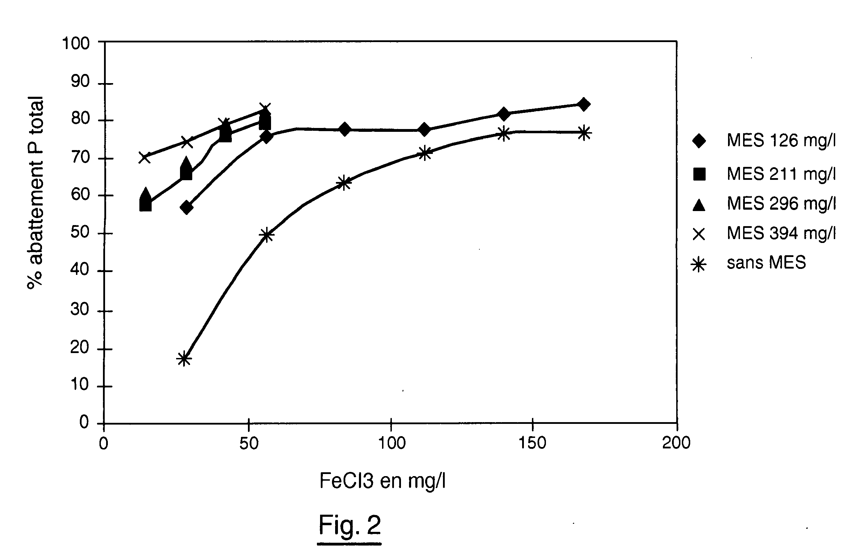

Les résultats de ces essais sont répertoriés sur le graphique de la figure 2.

On observe que, pour un même pourcentage d'abattement du Ptotal, les doses de FeC13 utilisées sont beaucoup plus faibles lorsqu'une étape d'adsorption est effectuée avec des boues à 125 mg/l.

Ainsi, pour éliminer 75% du Ptotal, il est nécessaire d'utiliser 60 ppm de FeCl₃ (produit commercial) avec des boues à 126 ppm (MES) pour 150 ppm de FeCl3 sans étape d'adsorption.

## Revendications

1. Procédé de traitement d'eaux, comprenant :
- une étape d'ajout de séquestrants contenant des phosphonates,
- une première étape de décantation produisant une eau prétraitée et des boues,
- au moins une étape de filtration membranaire de ladite eau prétraitée, ladite étape de filtration produisant une eau traitée et des rejets chargés en phosphonates,
**caractérisé en ce qu'**il comprend une phase de traitement desdits rejets incluant au moins :
- une étape de coagulation-floculation
- suivie d'une deuxième étape de décantation produisant des boues,
- ladite étape de coagulation-floculation étant précédée d'au moins une étape d'adsorption sur lesdites boues issues de la première et/ou de la deuxième étape de décantation,
ladite étape d'adsorption étant mise en oeuvre de manière à obtenir un abattement des phosphonates contenus dans les rejets issus de l'étape de filtration membranaire.

2. Procédé de traitement d'eaux selon la revendication 1, **caractérisé en ce que** lesdites boues sont des boues d'hydroxydes de fer ou d'aluminium.

3. Procédé de traitement d'eaux selon l'une des revendications 1 et 2, **caractérisé en ce que** ladite étape d'adsorption est réalisée sous agitation pendant de préférence 10 minutes.

4. Procédé de traitement d'eaux selon l'une quelconque des revendications 1 à 3, **caractérisé en ce que** ladite étape de coagulation-floculation est réalisée au moins en deux phases successives, la première sous agitation rapide et la deuxième sous agitation lente.

5. Procédé de traitement d'eaux selon l'une quelconque des revendications 1 à 4, **caractérisé en ce que** ladite étape de filtration appartient au groupe suivant :
- filtration par osmose inverse ;
- nanofiltration.

6. Procédé de traitement d'eaux selon l'une quelconque des revendications 1 à 5, **caractérisé en ce qu'**il comprend une étape de valorisation desdites boues en épandage agricole.

7. Procédé de traitement d'eaux selon la revendication 6, **caractérisé en ce qu'**il comprend au moins une étape de concentration desdites boues lorsque celles-ci sont saturées en phosphore.

## Claims

1. A water treatment method, comprising:
- a step of adding sequestrants containing phosphonates,
- a first settling step producing pretreated water and sludge,
- at least one membrane filtration step of said pretreated water, said filtration step producing treated water and waste loaded with phosphonates,
**characterised in that** it comprises a treatment phase of said waste including at least:
- a coagulation-flocculation step
- followed by a second settling step producing sludge,
- said coagulation-flocculation step being preceded by at least one step of adsorption on said sludge originating from the first and/or second settling step,
said adsorption step being implemented in such a way as to obtain a reduction in the phosphonates contained in the waste originating from the membrane filtration step.

2. The water treatment method according to claim 1, **characterised in that** said sludge is iron hydroxide or aluminium hydroxide sludge.

3. The water treatment method according to one of claims 1 and 2, **characterised in that** said adsorption step is carried out with stirring, preferably for 10 minutes.

4. The water treatment method according to any one of claims 1 to 3, **characterised in that** said coagulation-flocculation step is carried out in at least two successive phases, the first with rapid stirring and the second with slow stirring.

5. The water treatment method according to any one of claims 1 to 4, **characterised in that** said filtration step belongs to the following group:
- reverse osmosis filtration;
- nanofiltration.

6. The water treatment method according to any one of claims 1 to 5, **characterised in that** it comprises a step of utilizing said sludge for agricultural spreading.

7. The water treatment method according to claim 6, **characterised in that** it comprises at least one step of concentrating said sludge when this is saturated with phosphorus.

## Patentansprüche

1. Verfahren zur Wasseraufbereitung umfassend:
- einen Schritt des Hinzufügens eines Phosphonate enthaltenden Komplexbildners,
- einen ersten Schritt des Dekantierens, welcher ein vorbehandeltes Wasser und Schlämme erzeugt,
- mindestens einen Schritt der Membranfiltration des vorbehandelten Wassers, wobei der Schritt der Membranfiltration ein behandeltes Wasser und mit Phosphonaten angereicherte Abfälle erzeugt,
**dadurch gekennzeichnet, dass** es eine Phase der Behandlung der Abfälle umfasst, umfassend mindestens:
- einen Schritt der Koagulation-Ausflockung,
- gefolgt von einem zweiten, Schlämme erzeugenden Schritt des Dekantierens,
- wobei dem Schritt der Koagulation-Ausflockung mindestens ein Schritt der Adsorption auf die Schlämme aus dem ersten und/oder aus dem zweiten Dekantierschritt vorausgeht,
wobei der Schritt der Adsorption derart durchgeführt ist, dass ein Abschlag der in den Abfällen aus dem Schritt der Membranfiltration enthaltenen Phosphonate erhalten wird.

2. Verfahren zur Wasseraufbereitung nach Anspruch 1, **dadurch gekennzeichnet, dass** die Schlämme aus Eisenhydroxid oder Aluminium sind.

3. Verfahren zur Wasseraufbereitung nach einem der Ansprüche 1 oder 2, dadurch g e - **kennzeichnet,** dass der Schritt der Adsorption unter Rühren, vorzugsweise für 10 Minuten, ausgeführt ist.

4. Verfahren zur Wasseraufbereitung nach einem der Ansprüche 1 bis 3, dadurch g e - **kennzeichnet,** dass der Schritt der Koagulation-Ausflockung mindestens in zwei aufeinanderfolgenden Phasen, der ersten unter schnellem Rühren und der zweiten unter langsamem Rühren, ausgeführt wird.

5. Verfahren zur Wasseraufbereitung nach einem der Ansprüche 1 bis 4, dadurch g e - **kennzeichnet,** dass der Schritt der Membranfiltration zur folgenden Gruppe gehört:
- Filtration durch Umkehrosmose,
- Nanofiltration.

6. Verfahren zur Wasseraufbereitung nach einem der Ansprüche 1 bis 5, dadurch g e - **kennzeichnet,** dass es einen Schritt der Verwertung der Schlämme zur landwirtschaftlichen Ausbreitung umfasst.

7. Verfahren zur Wasseraufbereitung nach Anspruch 6, **dadurch gekennzeichnet, dass** es mindestens einen Schritt der Konzentration der Schlämme nach deren Sättigung mit Phosphor umfasst.
